# EUROPÄISCHE PATENTSCHRIFT

(11) **EP 0 790 436 B1**
(45) Veröffentlichungstag und Bekanntmachung des Hinweises auf die Patenterteilung: **26.04.2000**
(21) Anmeldenummer: 97102423.7
(22) Anmeldetag: 14.02.1997
(51) Int. Cl.: F16H 7/08

(54) **Spann- oder Führungsschiene für einen Kettentrieb**
Tension or guide rail for a chain transmission
Rail de tension ou de guidage pour une transmission à chaîne

(30) Priorität: 19.02.1996 DE 29602917 U
(43) Veröffentlichungstag der Anmeldung: 20.08.1997
(73) Patentinhaber: JOH. WINKLHOFER & SÖHNE GmbH & Co KG, D-81369 München (DE)
(72) Erfinder: Schulze, Peter, 85375 Neufahrn (DE)
(74) Vertreter: Grünecker, Kinkeldey, Stockmair & Schwanhäusser Anwaltssozietät

(56) Entgegenhaltungen:
- EP-A- 0 193 802
- EP-A- 0 279 934
- DE-A- 3 049 106
- DE-A- 4 310 306
- US-A- 5 045 032

## Beschreibung

Die Erfindung betrifft eine Spann- oder Führungsschiene gemäß dem Oberbegriff des Patentanspruchs 1.

Bei einer aus DE-C-37 06 136 bekannten Spannschiene ist der Träger in einem Spritzgußverfahren mit Schwalbenschwanznuten zum Festlegen des Gleitbelagkörpers vorgefertigt. Der Träger wird dann in eine andere Spritzform als Kern- bzw. Formunterteil eingelegt. Der Gleitbelagkörper wird erst dann durch Spritzgießen geformt und dabei mit dem Träger vereinigt. Alternativ ist erläutert, den Gleitbelagkörper in einer Spritzgußform herzustellen, in eine andere Spritzgußform als Kern oder Formunterteil einzusetzen, und dann den Träger durch Spritzgießen am Gleitbelagkörper zu formen und mit diesem zu vereinigen. Die Verbindung ist nachträglich zerstörungsfrei nicht mehr lösbar. Außerdem ist es verfahrensbedingt erforderlich, die ganze Spannschiene bei einem Hersteller fertigstellen zu lassen. Aus dem zweistufigen Verfahren und aus der Notwendigkeit, die Spannschiene bei einem Hersteller fertigen zu lassen, resultieren mehrere Nachteile. Da der zuerst spritzgegossene Träger beim Abkühlen schrumpft, muß die für die zweite Verfahrensstufe benötigte Spritzgußform außerordentlich präzise sein und das Schrumpfmaß berücksichtigen. Dies ist kostenintensiv. Außerdem werden für Spannschienen unterschiedlicher Dimensionen jeweils zwei teure Spritzgußformen benötigt. Insbesondere ist dies für die zweite Verfahrensstufe kompliziert und teuer. Denselben Träger mit mehreren unterschiedlich dimensionierten Gleitbelagkörpern wahlweise zu kombinieren, oder denselben Gleitbelagkörper mit unterschiedlich dimensionierten Trägern zu kombinieren, ist dadurch nicht möglich. Aufgrund der nicht lösbaren Verbindung und der bei nur einem Hersteller gefertigten Spannschiene hat der Verbraucher keine Möglichkeit, etwa einen Träger wahlweise mit formgleichen oder geringfügig in der Dimension verschiedenen Gleitbelagkörpern wahlweise zu kombinieren, z.B. mit Gleitbelagkörpern unterschiedlicher Kunststoff-Spezifikationen.

Bei einer aus DE-43 10 306 bekannten Spannschiene ist der Gleitbelag durch formschlüssige Elemente derart mit dem Träger verbunden, daß der Gleitbelag an einem Ende der Spannschiene in deren Längsrichtung frei beweglich ist, und zwar am Kettenablaufende. Die Verbindungselemente zwischen dem Gleitbelag und dem Träger sind so ausgebildet, daß entweder der Gleitbelag auf den vorgefertigten Träger aufgespritzt oder der Träger auf den vorgefertigten Gleitbelag aufgespritzt wird, d.h., daß die beiden Kunststoff-Komponenten nicht für sich vorgefertigt und nachträglich miteinander verbunden werden.

Bei einer aus US-A-5 045 032 bekannten Führungsschiene der im Oberbegriff des Anspruchs 1 angegebenen Art wird der Träger aus Metall vorgeformt, ehe der aus Kunststoff hergestellte Gleitbelag aufgebracht wird.

Bei einer aus DE 30 49 106 bekannten Spannschiene wird der Träger aus Metallblech durch Biegeverformung hergestellt und wird der Gleitbelag aus Kunststoff nachträglich aufgebracht.

Bei einer aus EP-A-0 193 802 bekannten Spann- oder Gleitschiene ist auf dem Träger eine Panzerung aus verschleißfestem Hartstoff mit niedrigem Reibungskoeffizienten vorgesehen. Die Panzerung wird durch elastisches Material mit dem Träger verbunden, der eine Leichtmetall-Gußkonstruktion ist.

Der Erfindung liegt die Aufgabe zugrunde, eine kostengünstig herstellbare und einfach montierbare Spann- oder Führungsschiene dieser Art zu schaffen.

Diese Aufgabe wird erfindungsgemäß mit den Merkmalen des Patentanspruchs 1 gelöst.

Dank der getrennt vorgefertigten Baueinheiten sind beide Spritzgußformen kostengünstig herstellbar, vor allem wegen der durch die mechanische Verbindung in den Hintergrund tretenden Dimensionsänderungen durch Schrumpfen. Der Verbraucher der Spannschiene kann sich beide Baueinheiten von getrennten Herstellern beschaffen und jeden Hersteller unter Kostengesichtpunkten auswählen. Da der Endverbraucher auch die Endmontage vornehmen und gegebenenfalls kostenorientierter montieren kann, werden die Kosten weiter vermindert. Ferner besteht die Möglichkeit, wahlweise mit einem Träger unterschiedliche Gleitbelagkörper zu kombinieren, bzw. mit einem Gleitbelagkörper unterschiedliche Träger zu kombinieren, die sich hinsichtlich der Materialspezifikation und der Dimensionen unterscheiden, insbesondere solcher Dimensionen, die für die Verbindung ohne Einfluß sind.

Es ist zwar in der Praxis und aus DE-A-35 06 010 bekannt, einen Leichtmetallträger mit einem Gleitbelagkörper mechanisch nachträglich zu verbinden. Jedoch sind die Herstellungs- und Montagekosten dieser Spannschiene unverhältnismäßig hoch und ist die Spannschiene unzweckmäßig schwer. Ferner müssen der Träger und der Belag körper bei diesem Bauprinzip im Regelfall bei unterschiedlichen Herstellern produziert werden.

Eine herstellungs- und montagetechnisch einfache Ausführungsform geht aus Anspruch 2 hervor. Der Tragrücken bildet die Abstützung für den Gleitbelagkörper im Gebrauch. Die Querrippe läßt sich als Widerlager zum Festlegen des Gleitbelagkörpers nutzen. Die Einhak-Taschen am Tragkörper sind mit ihren hinterschnittenen Schultern Teil der Form- und Kraftschlußelemente zum Herstellen der Verbindung. Der Gleitbelagkörper wird mit dem Hakenende über die Querrippe gestülpt und auf den Tragrücken aufgedrückt, bis die Rasthaken hinter die Taschenschultern einrasten. Diese Verbindung läßt sich gegebenenfalls ohne Spezialwerkzeug wieder lösen.

Bei der Ausführungsform gemäß Anspruch 3 läßt sich der Gleitbelagkörper in den Ausnehmungen in Längsrichtung des Tragrückens zusätzlich positionieren.

Bei der Ausführungsform gemäß Anspruch 4 kann die Querrippe hohe Belastungen aufnehmen und zur seitlichen Zentrierung des Gleitbelagkörpers in die Tasche des Hakenendes eingesetzt werden.

Um die Seitenwangen von schädlichen Scherkräften freizuhalten, ist die Ausführungsform gemäß Anspruch 5 zweckmäßig.

Bei der Ausführungsform gemäß Anspruch 6 wird mittels der Vorsprünge eine zusätzliche Positionierung des Gleitbelagkörpers auf dem Tragrücken erreicht. Die Vorsprünge passen satt in die Ausnehmungen und leiten beim Arbeiten der Spannschiene in Längsrichtung auftretende Kräfte großflächig in den Träger über, wobei sie die Seitenwangen und gegebenenfalls das Hakenende entlasten.

Anhand der Zeichnung wird eine Ausführungsform des Erfindungsgegenstandes erläutert. Es zeigen:
- Fig. 1: eine Seitenansicht einer aus vorgefertigten Baueinheiten montierten Spannschiene,
- Fig. 2: einen Schnitt in der Ebene II-II von Fig. 1, in vergrößertem Maßstab,
- Fig. 3: einen Schnitt in der Ebene III-III von Fig. 1, in vergrößertem Maßstab, und
- Fig. 4: einen Schnitt in der Ebene IV-IV in Fig. 1 in vergrößertem Maßstab.

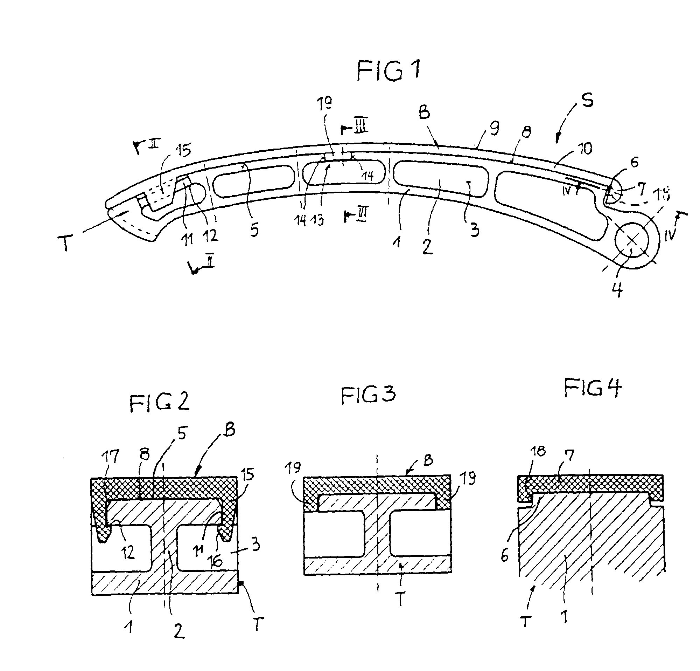

Eine Spannschiene S gemäß Fig. 1, vorzugsweise für einen Steuerkettenantrieb einer Brennkraftmaschine, besteht aus einem aus gefülltem oder verstärktem, insbesondere faserverstärktem, Kunststoff einstückig hergestellten Träger T und einem ebenfalls aus Kunststoff als vorgefertigte Einheit hergestellten, nachträglich mit dem Träger T verbundenen Gleitbelagkörper B, der aus ungefülltem Kunststoff mit guten Gleit- und Dauerfestigkeitseigenschaften bestehen kann. Die beiden Baueinheiten T, B sind getrennt vorgefertigt und miteinander mechanisch verbunden, beispielsweise durch an den beiden Baueinheiten T, B einstückig angeformten Form- und Kraftschlußelemente. Es wäre auch denkbar, den Gleitbelagträger B nachträglich durch Nieten, Schrauben, Kleben oder Schweißen mechanisch mit dem Träger T zu verbinden.

Der Träger T besitzt einen schienenartigen Grundkörper 1 mit mehreren Querdurchgängen 3, die von einer Mitteltrennwand 2 unterbrochen sind. Am in Fig. 1 rechten Ende (Zulaufseite einer Steuerkette) ist ein Lagerauge 4 eingeformt. Die Oberseite des Trägers T bildet einen bei dieser Ausführungsform gekrümmt verlaufenden, in Querrichtung ebenen Tragrücken 5, hinter dessen dem Lagerauge 4 zugewandten Ende eine Querrippe 6 mit gerundetem Vollquerschnitt angeformt ist.

Der Gleitbelagträger B ist ein Band 10 mit glatter Arbeitsfläche 9 und einer Unterseite 8. Ein Ende des Gleitbelagträgers B weist ein einstückig angeformtes Hakenende 7 auf, das innenseitig eine beidseitig begrenzte Tasche 18 für die Querrippe 6 enthält. Nahe dem dem Hakenende 7 abgewandten Endbereich sind zwei über die Unterseite 8 nach unten ragende Seitenwangen 15 angeformt, deren untere Enden hinterschnittene Rasthaken 16 bilden (Fig. 2). In etwa in der Längsmitte des Grundkörpers 10, jedoch näher bei den Seitenwangen 15, sind seitliche Vorsprünge 19 angeformt, die über die Unterseite 8 nach unten vorstehen.

Im Grundkörper 1 des Trägers T sind im dem Lagerauge 4 abgewandten Endebereich zwei seitliche Einstecktaschen 11 eingeformt, deren jede eine hinterschnittene Taschen-Schulter 12 besitzt. Ferner sind in den Grundkörper 1 zwei seitliche Ausnehmungen 13 eingeformt, die zum Tragrücken 5 offen und in Längsrichtung beiderseits durch Anschläge 14 begrenzt sind.

Zum Verbinden der vorgefertigten Baueinheiten T, B wird zunächst das Hakenende 7 über die Querrippe 6 gehakt (Fig. 4) und das Band auf den Tragrücken 5 aufgelegt. Die seitlichen Vorsprünge 19 tauchen in die Ausnehmungen 13 ein und werden zwischen den Anschlägen 14 positioniert. Die Seitenwangen 15 gleiten mit ihren Rasthaken 16 über anfängliche Einführschrägen 17 in die Einsteck-Taschen 11, bis schließlich die Rasthaken 16 hinter die Taschen-Schultern 12 greifen.

Zur Demontage brauchen nur die Rasthaken 16 aus ihrem Eingriff gelöst. Der Gleitbelagkörper B ist unter Hochschwenken vom Träger T abzunehmen.

## Patentansprüche

1. Spann- oder Führungsschiene (S) für einen Kettentrieb, insbesondere in einer Brennkraftmaschine, mit einem Träger (T) und einem aus Kunststoff geformten Gleitbelagkörper (B), der mittels Form- und Kraftschlußelementen form -und kraftschlüssig mit dem Träger verbunden ist, wobei der Träger (T) und der Gleitbelagkörper (B) getrennt mit zueinander passenden Form- und Kraftschlußelementen einstückig vorgefertigte Baueinheiten sind und nachträglich mechanisch miteinander verbunden sind, **dadurch gekennzeichnet**, daß der Träger (T) aus gefülltem oder verstärktem Kunststoff geformt ist.

2. Spann- oder Führungsschiene nach Anspruch 1, **dadurch gekennzeichnet,** daß am Träger (T) an einem Ende eines Tragrückens (5) eine Querrippe (6) angeformt ist;
an zumindest einer von der Querrippe (6) in Längsrichtung beabstandeten Stelle beiderseits und unterhalb des Tragrückens (5) Einhak-Taschen (11) mit hinterschnittenen Taschen-Schultern (12) vorgesehen sind;
in Ausrichtung auf die Einhak-Taschen (11) über die Unterseite (8) des Gleitbelagkörpers (B) vorstehende Seitenwangen (5) angeformt sind; und
die freien Enden der Seitenwangen (15) zueinander weisende Rasthaken (16) zum Hintergreifen der Taschen-Schultern (12) sind.

3. Spann- oder Führungsschiene nach Anspruch 2, **dadurch gekennzeichnet,** daß die Einhak-Taschen (11) beim der Querrippe (6) abgewandten Endbereich des Tragrückens (5) vorgesehen sind, und daß zwischen den Einhak-Taschen (11) und der Querrippe (6) beiderseits und unterhalb des Tragrückens (5) jeweils mindestens eine durch zwei in Längsrichtung des Tragrückens (5) wirksame Anschläge (14) begrenzte Ausnehmung (13) vorgesehen ist.

4. Spann- oder Führungsschiene nach Anspruch 2, dadurch gekennzeichnet, daß die Querrippe (6) an beiden Enden gegenüber der Breitenerstreckung des Tragrückens (5) zurücktritt und einen gerundeten Vollquerschnitt aufweist.

5. Spann- oder Führungsschiene nach Anspruch 2, dadurch gekennzeichnet, daß die Einhak-Taschen (11) in Längsrichtung des Trägers (T) weiter sind als die Seitenwangen (15).

6. Spann- oder Führungsschiene nach Anspruch 3, dadurch gekennzeichnet, daß am Gleitbelagkörper (B) zwei seitliche, unterseitig vorstehende Vorsprünge (19) angeformt sind, und daß die in Längsrichtung gesehene Weite der Vorsprünge (19) annähernd dem Abstand zwischen den Anschlägen (14) jeder Ausnehmung (13) entspricht.

## Claims

1. A tension or guide rail (S) for a chain drive, in particular an internal combustion engine, comprising a carrier (T) and a slideway lining body (B) which is formed from plastics and connected to the carrier in form-fit or friction-locked fashion by means of form-fit and friction-locking elements, the carrier (T) and the slideway lining body (B) being separated constructional units which are integrally prefabricated with matching form-fit and friction locking elements, **characterized in** that the carrier (T) is formed from filled or reinforced plastics.

2. A tension or guide rail according to claim 1, **characterized in** that a transerve rib (6) is formed on the carrier (T) at an end of a carrier back (5);
hook-type pockets (11) with undercut pocket shoulders (12) are provided at both sides of and below the carrier back (5) at at least one place longitudinally spaced apart from the transverse rib (6);
side cheeks (5) which project over the bottom side (8) of the slideway lining body (B) are formed in alignment with the hook-type pockets (11); and
the free ends of the side cheeks (15) are snap-type hooks (16) oriented towards one another for gripping behind the pocket shoulders (12).

3. A tension or guide rail according to claim 2, **characterized in** that the hook-type pockets (11) are provided at the end portion of the carrier back (5) which faces away from the transverse rib (6), and that the hook-type pockets (11) and the transverse rib (5) have provided thereinbetween, at both sides of and below the carrier back (5), at least one respective recess (13) defined by two stops (14) that are operative in the longitudinal direction of the carrier back (5).

4. A tension or guide rail according to claim 2, **characterized in** that the transverse rib (6) recedes at both ends with respect to the width extension of the carrier back (5) and has a rounded full cross-section.

5. A tension or guide rail according to claim 2, **characterized in** that the hook-type pockets (11) are wider in the longitudinal direction of the carrier (T) than the side cheeks (15).

6. A tension or guide rail according to claim 3, **characterized in** that the slideway lining body (B) has formed thereon two lateral projections (19) which project at the bottom side, and that the width of the projections (19), when viewed in longitudinal direction, approximately corresponds to the distance between the stops (14) of each recess (13).

## Revendications

1. Rail de tension ou de guidage (S) pour une transmission à chaîne, en particulier dans un moteur à combustion interne, comprenant un support (T) ainsi qu'un corps de revêtement glissant (B) formé de matière plastique, qui au moyen d'éléments de transmission de force et d'engrenage des formes est relié audit support de manière à permettre ladite transmission de force et ledit engrenage des formes, le support (T) et le corps de revêtement glissant (B) étant des ensembles préfabriqués séparément en une pièce avec des éléments correspondants de transmission de force et d'engrenage des formes et raccordées ultérieurement, caractérisé en ce que le support (T) est formé de matière plastique chargée ou renforcée.

2. Rail de tension ou de guidage selon la revendication 1, caractérisé en ce qu'une nervure transversale (6) est formée sur le support (T), à une extrémité d'un dos porteur (5) ;
en ce que des poches d'accrochage (11) avec des épaulements de poche (12) contre-dépouillés sont prévues à au moins un endroit distant de la nervure transversale (6) en sens longitudinal, de part et d'autre et au-dessous du dos porteur (5) ;
en ce qu'en alignement avec les poches d'accrochage (11), des joues latérales (5) débordant de la face inférieure (8) du corps de revêtement glissant (B) sont formées ; et
en ce que les extrémités libres des joues latérales (15) sont des crochets d'arrêt (16) placés en regard destinés à saisir l'arrière des épaulements de poche (12).

3. Rail de tension ou de guidage selon la revendication 2, caractérisé en ce que les poches d'accrochage (11) sont prévues dans la partie d'extrémité du dos porteur (5) opposée à la nervure transversale (6) et en ce qu'à chaque fois au moins un creux (13) limité par deux butées (14) agissant en sens longitudinal du dos porteur (5) est prévu à chaque fois entre les poches d'accrochage (11) et la nervure transversale (6), de part et d'autre et au-dessous du dos porteur (5).

4. Rail de tension ou de guidage selon la revendication 2, caractérisé en ce que la nervure transversale (6), aux deux extrémités, est en retrait par rapport à l'extension en largeur du dos porteur (5) et comporte une section complète arrondie.

5. Rail de tension ou de guidage selon la revendication 2, caractérisé en ce que les poches d'accrochage (11) sont plus larges en sens longitudinal du support (T) que les joues latérales (15).

6. Rail de tension ou de guidage selon la revendication 3, caractérisé en ce que deux saillies (19) latérales débordant de la face inférieure sont formées sur le corps de revêtement glissant (B) et en ce que la largeur des saillies (19) vue en sens longitudinal correspond approximativement à la distance entre les butées (14) de chaque creux (13).
